(19) Europäisches Patentamt
European Patent Office
Office européen des brevets

(11) **EP 3 374 746 B1**

(12) **EUROPÄISCHE PATENTSCHRIFT**

(45) Veröffentlichungstag und Bekanntmachung des Hinweises auf die Patenterteilung:
**15.07.2020   Patentblatt 2020/29**

(21) Anmeldenummer: **16795011.2**

(22) Anmeldetag: **10.11.2016**

(51) Int Cl.:
**G01M 3/20** *(2006.01)*

(86) Internationale Anmeldenummer:
**PCT/EP2016/077242**

(87) Internationale Veröffentlichungsnummer:
**WO 2017/081136 (18.05.2017 Gazette 2017/20)**

(54) **DRUCKMESSUNG AM PRÜFGASEINLASS**

PRESSURE MEASUREMENT AT THE TEST GAS INLET

MESURE DE PRESSION À L'ORIFICE D'ENTRÉE DE GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2015   DE 102015222213**

(43) Veröffentlichungstag der Anmeldung:
**19.09.2018   Patentblatt 2018/38**

(73) Patentinhaber: **Inficon GmbH**
**50968 Köln (DE)**

(72) Erfinder:
- **BRUHNS, Hjalmar**
  **50968 Köln (DE)**
- **GERDAU, Ludolf**
  **50968 Köln (DE)**
- **MOSER, Norbert**
  **50968 Köln (DE)**
- **SCHMITZ, Günter**
  **50968 Köln (DE)**
- **WETZIG, Daniel**
  **50968 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
EP-A1- 0 283 543          WO-A1-2004/111599
WO-A2-2015/036282    DE-A1- 4 140 366
DE-A1- 19 504 278

## Beschreibung

Die Erfindung betrifft ein Verfahren und eine Vorrichtung zur Messung des Drucks am Prüfgaseinlass eines massenspektrometrischen Lecksuchers.

Bei der massenspektrometrischen Lecksuche werden die auf Dichtheit zu prüfenden Objekte unter Vakuumbedingungen unter Einsatz von Prüfgas getestet. Zum Betrieb des Massenspektrometers muss ein Druck von weniger als $10^{-4}$ mbar erreicht werden.

Grundsätzlich wird bei den Dichtheitsprüfverfahren mit einem Vakuumlecksucher zwischen der Vakuummethode und der Überdruckmethode unterschieden. Bei der Vakuummethode wird der Prüfling evakuiert und einer Prüfgasatmosphäre ausgesetzt. Das aus dem Prüfling abgezogene Gas wird auf Vorhandensein von Prüfgas untersucht. Bei der Überdruckmethode wird der Prüfling mit Prüfgas mit einem Druck beaufschlagt, der größer als der Druck der den Prüfling umgebenden Atmosphäre ist. Die den Prüfling umgebende Atmosphäre wird sodann auf Vorhandensein von Prüfgas untersucht.

Bei der Vakuummethode und bei der Überdruckmethode kann die Prüfung entweder integral oder lokalisierend erfolgen. Bei der integralen Dichtheitsprüfung ist der Prüfling in eine Vakuum- beziehungsweise Druckkammer eingebracht und das aus dem Prüfling beziehungsweise der Prüfkammer abgezogene Gas wird auf Vorhandensein von Prüfgas untersucht. Bei der integralen Prüfung wird untersucht, ob der Prüfling mindestens ein Leck aufweist und welche Gesamtleckrate diese Lecks aufweisen.

Bei der lokalisierenden Prüfung soll der Ort eines Lecks ermittelt werden. Bei der lokalisierenden Vakuummethode wird der evakuierte und an den massenspektrometrischen Lecksucher angeschlossene Prüfling von außen mit Hilfe einer Sprühpistole mit dem Prüfgas besprüht. Bei der lokalisierenden Überdruckmethode wird der mit Prüfgas druckbeaufschlagte Prüfling von außen mit einer handgeführten Schnüffelsonde abgeschnüffelt.

Bei sämtlichen der oben beschriebenen Verfahren kommt ein massenspektrometrischer Lecksucher zum Einsatz, der einen Prüfgaseinlass aufweist, durch den der zu untersuchende Prüfgasstrom angesaugt wird und dem Massenspektrometer zur Ermittlung des Prüfgaspartialdrucks zugeführt wird. Da eine Untersuchung mit Hilfe des Massenspektrometers nur möglich ist, wenn im Massenspektrometer ein Vakuumdruck herrscht, muss vor dem Öffnen des Prüfgaseinlasses der Totaldruck am Einlass ausreichend abgesenkt sein. Das Massenspektrometer wird von einer Hochvakuumpumpe, meist einer Turbomolekularpumpe, und einer an den Auslass der Hochvakuumpumpe angeschlossenen Vorvakuumpumpe evakuiert. Ein Zwischengaseinlass der Hochvakuumpumpe ist mit dem Prüfgaseinlass des Lecksuchsystems verbunden.

Ein Groblecknachweis ist möglich, wenn der Druck am Prüfgaseinlass unterhalb des für die Hochvakuumpumpe zulässigen Vordrucks von typischerweise 15 mbar abgesenkt ist. Insbesondere bei großen Volumen (Prüfkammervolumen), die über das Vakuumsystem des Lecksuchers, beispielsweise die Vorvakuumpumpe, evakuiert werden müssen, dauert es lange, bis der für die Hochvakuumpumpe zulässige Vordruck am Prüfgaseinlass unterschritten ist und mit der Prüfung begonnen werden kann.

Daher ist es grundsätzlich wünschenswert, bereits bei einem Einlassdruck von mehr als 15 mbar eine Lecksuche betreiben zu können. Hierzu ist es bekannt, einen geringen Teilgasstrom aus dem Einlassbereich des Lecksuchers dem Nachweissystem zuzuführen. Beispielsweise wird bei dem INFICON-Lecksuchgerät UL400 ein Teilstrom des durch den Prüfgaseinlass angesogenen Gasstroms direkt dem Massenspektrometer zugeführt. Beim direkten Gaseinlass in das Massenspektrometer (Hauptstromverfahren) muss üblicherweise mit einer Flüssigstickstoff-Kühlfalle der Einfluss des Wasserdampfes aus der Atmosphäre auf das Messsignal reduziert oder vermieden werden. Die Drosselung des direkt in das Massenspektrometer eingelassenen Teilstroms ist derart ausgebildet, dass der Teilstrom durch Öffnen eines entsprechenden Ventils ab einem Druck von weniger als 100 mbar dem Massenspektrometer zugeführt werden kann.

Bei dem INFICON-Lecksucher UL500 ist es zu einem frühzeitigen Nachweis eines Leckagesignals (Grobleckmessung) möglich, den Prüfgaseinlass über eine Drossel mit dem Vorvakuum der Turbomolekularpumpe am Massenspektrometer zu verbinden. Die Drossel ist eine Blende, über die bereits direkt nach dem Öffnen des Prüfgaseinlasses bei einem Druck von weniger als 1000 mbar zum Vorevakuieren ein kleiner Heliumanteil im Gegenstrom über die Turbomolekularpumpe in das Nachweissystem (Massenspektrometer) gelangt. Diese Anordnung ist beispielsweise beschrieben in EP 283543 A1 und EP 0 615 615 B1.

Zur Detektion von Massivlecks eignet sich im ersten Schritt die Bewertung des Totaldruckabfalls zwischen 1000 und 100 mbar. Bei den bekannten Verfahren wird zur Messung des Totaldrucks am Einlassbereich des Lecksuchers ein Drucksensor nach dem Pirani-Messprinzip eingesetzt. Derartige Sensoren sind preiswert und in der Lage, Arbeitsdrücke im Bereich zwischen $10^{-3}$ und 100 mbar präzise zu messen. Der Totaldruck im Bereich zwischen 100 mbar und 1000 mbar kann jedoch nur unzureichend detektiert werden.

Im zweiten Schritt, wenn der Druck aufgrund eines vorhandenen Massivlecks zu langsam fällt oder sich über das Saugvermögen der Vorpumpe und das durch das Massivleck einströmende Gas ein Gleichgewichtsdruck oberhalb von 15mbar einstellt, soll das Massivleck über das Ansprühen mit einem Prüfgas lokalisiert werden.

Während der Abpumpphase ist das Nachweissystem des Lecksuchers blind geschaltet oder die Empfindlichkeit des Lecksuchers derart reduziert, dass nur bei großen Lecks ein Signal nachweisbar ist. Bei besonders groben Leckagen am Prüfling kann sich die Dauer des Abpumpens noch weiter verlängern oder der erforderliche Arbeitsdruck zum Erreichen der Messbereitschaft mit dem Vakuumsystem gar nicht erreicht werden. In diesem Fall ist die Lokalisierung eines Groblecks mit dem eigentlich für diese Aufgabe vorgesehenen Lecksucher unmöglich.

Der Totaldruck am Einlassflansch des Prüfgaseinlasses kann mit einem typischen Pirani-Drucksensor im Druckbereich zwischen 100 mbar und 1000 mbar nicht gemessen werden. Es soll vermieden werden, für diesen Druckbereich einen eigenen Totaldrucksensor zu verwenden.

Typische Leckagedetektionssysteme sind aus WO 2004/111599 A1, WO 2015/036282 A2, DE 41 40 366 A1, DE 195 04 278 A1 und EP 0 283 543 A1 bekannt.

Der Erfindung liegt daher die Aufgabe zugrunde, bereits bei deutlich höherem Druck als 15 mbar einen undichten Prüfling anhand einer verbesserten Messung des Totaldrucks am Prüfgaseinlass eines massenspektrometrischen Lecksuchers festzustellen und die Leckage zu lokalisieren.

Die erfindungsgemäße Vorrichtung wird definiert durch die Merkmale von Anspruch 1. Das erfindungsgemäße Verfahren ist definiert durch die Merkmale von Anspruch 8.

Die erfindungsgemäße Totaldruckmessung betrifft massenspektrometrische Lecksucher, bei denen das Messvolumen eines Massenspektrometers mit dem Einlass einer Hochvakuumpumpe, zum Beispiel einer Turbomolekularpumpe, verbunden ist und der Auslass der Hochvakuumpumpe mit dem Einlass einer Vorvakuumpumpe verbunden ist. Die zweistufige Vakuumpumpe dient zur Evakuierung des Messvolumens des Massenspektrometers. Der Einlass der Vorvakuumpumpe ist zudem mit dem Prüfgaseinlass verbunden, um das Testgas anzusaugen beziehungsweise die Prüfkammer oder den Prüfling zu evakuieren. Erfindungsgemäß wird mit Hilfe einer gasführenden Verbindungsleitung der Einlass der Vorvakuumpumpe mit mindestens einem Zwischengaseinlass der Hochvakuumpumpe verbunden. In der Verbindungsleitung wird der Gasstrom mit Hilfe einer Flussdrossel gedrosselt. Die Verbindungsleitung kann beispielsweise von der Vorvakuum-Einlassleitung, die den Prüfgaseinlass mit dem Einlass der Vorvakuumpumpe verbindet, abzweigen. Die Verbindungsleitung kann in eine Hochvakuum-Einlassleitung münden, die den Zwischengaseinlass mit dem Prüfgaseinlass verbindet. Hierbei ist vorteilhafterweise jeweils in der Vorvakuum-Einlassleitung, in der Hochvakuum-Einlassleitung und in der die beiden Vakuumpumpen verbindenden Vakuumleitung jeweils ein Ventil zum separaten Öffnen und Schließen der Leitung vorgesehen.

Beim Evakuieren einer an den Prüfgaseinlass angeschlossenen Prüfkammer oder eines an den Prüfgaseinlass angeschlossenen Prüflings mit Hilfe der Vorvakuumpumpe wird Gas durch die Vorvakuum-Einlassleitung aus dem Prüfgaseinlass angesaugt. Über die Verbindungsleitung wird ein Teilstrom aus der Vorvakuum-Verbindungsleitung abgezweigt und dem Zwischeneinlass der Hochvakuumpumpe zugeführt. Über den Zwischengaseinlass gelangt der Teilstrom in das Messvolumen des Massenspektrometers. Alternativ kann der Teilstrom auch direkt ins Massenspektrometer eingelassen werden. Dort kann der Partialdruck des jeweils verwendeten Prüfgases, zum Beispiel Helium, bestimmt werden. Anhand des Prüfgaspartialdrucks kann der am Prüfgaseinlass vorliegende Totaldruck ermittelt werden. Hierbei wird angenommen, dass der zu evakuierende Prüfling oder die zu evakuierende Prüfkammer Luft oder ein anderes Gas mit einer Prüfgaskonzentration (Heliumkonzentration) enthält. So wird vom Massenspektrometer zum Beispiel anhand des Luft-Helium-Anteils ein proportionales Signal geliefert, um den Totaldruck am Einlassflansch des Prüfgaseinlasses mit dem Massenspektrometer über den Heliumpartialdruck zu messen.

Die Verbindungsleitung mündet in die Hochvakuum-Einlassleitung zwischen dem Zwischengaseinlass der Hochvakuumpumpe und dem Prüfgaseinlass. Falls ein Ventil zum separaten Öffnen und Schließen der Hochvakuum-Einlassleitung vorgesehen ist, mündet die Verbindungsleitung zwischen dem Ventil und dem Zwischengaseinlass in die Hochvakuum-Einlassleitung.

Der über die Verbindungsleitung dem Massenspektrometer zugeführte Teilstrom wird gedrosselt, möglichst auf einen Gasdurchsatz von mehr als $10^{-4}$ mbar·l/s (bei einer Druckdifferenz über der Drossel von 1000 mbar zu 0 mbar). Die Drosselung erfolgt möglichst nahe an dem Abzweigungspunkt der Verbindungsleitung aus der Vorvakuum-Einlassleitung. Dieser Abzweigungspunkt kann prinzipiell an einer beliebigen Stelle im Vorvakuumstrang zwischen dem Prüfgaseinlass und dem Auslass der Vorvakuumpumpe liegen, d.h. bei Verwendung einer mehrstufigen Vorpumpe auch zwischen den Pumpenstufen. Der Abstand der Drossel zum Abzweigungspunkt der Verbindungsleitung aus der Vorvakuum-Einlassleitung ist also geringer als der Abstand zu der Verbindungsstelle der Verbindungsleitung mit der Hochvakuum-Einlassleitung. Vorzugsweise beträgt der Abstand zu der Abzweigungsstelle mit der Vorvakuum-Einlassleitung etwa ein Drittel und vorzugsweise etwa ein Viertel der Gesamtlänge der Verbindungsleitung. Idealerweise liegt die Abzweigungsstelle direkt im Gasstrom der Vorvakuum-Einlassleitung. Die Drossel ist also möglichst nahe an bzw. gar in der Abzweigung angeordnet, um eine optimale Anströmung der Drossel für einen möglichst guten Gasaustausch zu erreichen, um schnelle Reaktionen zu ermöglichen. Der Volumenbereich innerhalb der Verbindungsleitung zwischen der Abzweigungsstelle aus der Vorvakuum-Einlassleitung und der Drossel ist aufgrund von turbulenter Strömung gut gespült bis zu einer Tiefe, die ungefähr dem Leitungsdurchmesser entspricht.

Die Drossel kann als Blende oder als Kapillare ausgeführt werden. Die ideale Wahl von Länge und Durchmesser ist nach den bekannten Formeln zur Gasströmung durch Blenden und Kapillaren je nach Durchmesser zu wählen, und kann insbesondere bei $25\mu$m Kapillardurchmesser eine Länge von 5cm sein, um einen Gasstrom von $5\cdot10^{-4}$ mbar l/s bei 1000 mbar gegen 0 mbar zu erreichen. Bei der Wahl von Durchmesser und Länge ist darauf zu achten, dass sich auch bei einem Gasdruck von 15mbar und entsprechend reduzierter Strömung durch die Drossel bzw. verlängerter Gasaustauschzeit in der Drossel ausreichend kurze Ansprechzeiten von typischerweise 1s ergeben.

Die Drossel erlaubt eine präzise Messung des Totaldruck-Verlaufs direkt nach Beginn des Abpumpens mit Hilfe der Vorvakuumpumpe. Das Volumen im Vorvakuumbereich der Turbomolekularpumpe, das heißt am Auslass der Turbomolekularpumpe, wird derart dimensioniert, dass der Betrieb zur Massivlecksuche bei geschlossenen Ventilen in der Vakuumleitung zwischen der Hochvakuumpumpe und der Vorvakuumpumpe und in der Hochvakuum-Einlassleitung ausreichend lange aufrecht erhalten werden kann. Die Dauer, mit der der Betrieb zur Massivlecksuche möglich ist, hängt vom Verhältnis aus dem Fluss durch die Drossel in der Verbindungsleitung und dem Volumen im Vorvakuumbereich der Turbomolekularpumpe ab. Zusammen mit dem zulässigen maximalen Totaldruck an der Vorvakuumseite der Hochvakuum-/Turbomolekularpumpe ergibt sich hieraus die maximale Betriebsdauer im Massivleckbetrieb im ungünstigsten Fall zu

$$\text{Betriebsdauer} = V \cdot p_{V,max} / Q$$

Q: Fluss durch Drossel D1
V: Volumen Vorvakuumbereich
$p_{V,max}$: maximal zulässiger Vorvakuumdruck

Die Auslegung des Volumens muss für die Applikation typische Abpumpzeiten berücksichtigen, da bei fallendem Druck am Prüfgaseinlass auch der Gasstrom Q durch die Drossel kleiner und damit die maximale Betriebsdauer während der Massivlecksuche länger wird. Damit der Betrieb zur Massivlecksuche über eine Stunde ununterbrochen durchgeführt werden kann, ist das Volumen im Vorvakuumbereich vorzugsweise größer als 10 cm$^3$ und idealerweise 20 cm$^3$. Im schlechtesten Fall, d.h. das Leck im Prüfling ist so groß, dass die Vorvakuumpumpe den Druck nicht reduzieren kann, ergibt sich bei V=20cm$^3$, $p_{V,max}$ = 15 mbar und Q=$5\cdot10^{-4}$ mbar l/s eine schlechtest zu erwartende Betriebsdauer von 600s, nach der der Betrieb der Massivlecksuche für weniger als 10s unterbrochen werden muss, um das Vorvakuumvolumen der Turbomolekularpumpe wieder zum Enddruck zu pumpen, wonach der Betrieb zur Massivlecksuche wieder aufgenommen werden kann.

Die Erfindung ermöglicht mit der permanenten Drossel-Verbindung zwischen dem Vorvakuumpumpen-Einlass und dem Zwischengaseinlass der Hochvakuumpumpe eine besonders schnelle Reaktion des Messsignals, eine Messung von Leckraten bei Arbeitsdrücken von mehr als 15 mbar, eine Messung des Totaldrucks am Prüfgaseinlass (Einlassflansch) mit reproduzierbarer Kennlinie und eine präzise Messung des Totaldrucks am Einlassflansch ab 1000 mbar ohne zusätzlichen Drucksensor.

Im Folgenden werden anhand der Figuren Ausführungsbeispiele der Erfindung näher erläutert. Es zeigen:

Fig. 1 ein erstes Ausführungsbeispiel,

Fig. 2 ein zweites Ausführungsbeispiel und

Fig. 3 ein drittes Ausführungsbeispiel

Im Folgenden werden zunächst die Gemeinsamkeiten der Ausführungsbeispiele beschrieben. Dies sind im Wesentlichen ein Lecksuchsystem mit einem Massenspektrometer 12, einer Hochvakuumpumpe 14, einer Vorvakuumpumpe 16 und einem Prüfgaseinlass 18.

Das Massenspektrometer 12 ist über eine gasleitende Messleitung 20 mit dem Einlass 22 der Hochvakuumpumpe 14 verbunden. Bei der Hochvakuumpumpe 14 handelt es sich um eine Turbomolekularpumpe. Der Auslass 24 der Hochvakuumpumpe 14 ist mit dem Einlass 26 der Vorvakuumpumpe 16 über eine Vakuumleitung 28 gasleitend verbunden. In der Vakuumleitung 28 ist ein separat schließbares Ventil V2 vorgesehen. Über die beiden Vakuumpumpen 14, 16 wird das Messvolumen des Massenspektrometers 12 evakuiert.

Der Prüfgaseinlass 18 ist über eine Vorvakuum-Einlassleitung 30 mit dem Einlass 26 der Vorvakuumpumpe 16 gasleitend verbunden, um ein an den Prüfgaseinlass 18 angeschlossenes Volumen (Prüfkammer oder Prüfling) mit der Vorvakuumpumpe 16 zu evakuieren. Weiterhin ist der Prüfgaseinlass 18 über eine Hochvakuum-Einlassleitung 32 mit dem Zwischengaseinlass 34 der Hochvakuumpumpe 14 verbunden.

An einer Abzweigstelle 36 zweigt von der Vorvakuum-Einlassleitung 30 eine gasleitende Verbindungsleitung 38 ab und mündet an einer Mündungsstelle 40 in die Hochvakuum-Einlassleitung 32. Die Verbindungsleitung 38 verbindet dadurch den Einlass 26 der Vorvakuumpumpe 16 direkt und permanent mit dem Zwischengaseinlass 34 der Hochvakuumpumpe 14, ohne dass ein Ventil in der Verbindungsleitung 38 vorgesehen ist.

Die Verbindungsleitung 38 weist möglichst nah an der Abzweigungsstelle 36 eine Drossel 42 auf, die bei einer Druckdifferenz von 1000 mbar zu 0 mbar über der Drossel einen Gasdurchlass von mehr als $10^{-4}$ mbar·l/s, nämlich circa $2\ 10^{-4}$ mbar·l/s ermöglicht und einen darüber hinausgehenden Gasdurchsatz verhindert.

Die Drossel 42 ist als Blende oder Kapillare ausgebildet.

Der Abstand der Drossel 42 von der Abzweigungsstelle 36 beträgt circa ein Zehntel des Abstands zwischen der Abzweigungsstelle 36 und der Mündungsstelle 40, das heißt der Länge der Verbindungsleitung 38.

Die Vorvakuum-Einlassleitung 30 weist zwischen dem Prüfgaseinlass 18 und der Abzweigungsstelle 36 ein separat schließbares Ventil V1 auf. Die Hochvakuum-Einlassleitung 32 weist zwischen dem Prüfgaseinlass 18 und der Mündungsstelle 40 ein separat schließbares Ventil V4 auf.

Im Betrieb sind beim zunächst erfolgenden Grobevakuieren eines an den Prüfgaseinlass 18 angeschlossenen Volumens (Prüfkammervolumen oder Prüflingsvolumen) zunächst die Ventile V2 und V4 geschlossen und das Ventil V1 geöffnet. Die Vorvakuumpumpe 16 evakuiert dann über den Prüfgaseinlass 18.

Um während dieser Grobevakuierung über den Prüfgaseinlass 18 den Druck am Prüfgaseinlass 18 messen zu können, ohne dass ein zusätzlicher Drucksensor erforderlich ist, wird über die Verbindungsleitung 38 ein Teilstrom aus der Vorvakuum-Einlassleitung 30 abgezweigt und über den Zwischengaseinlass 34 der Hochvakuumpumpe 14 dem Massenspektrometer 12 zugeführt. Mit Hilfe der Drossel 42 wird der Teilgasstrom ausreichend gedrosselt, um von dem Massenspektrometer 12 auswertbar zu sein. Mit Hilfe des Massenspektrometers 12 wird der Partialdruck des in dem abgezweigten Gasstrom enthaltenen Prüfgases ermittelt. Typischerweise wird als Prüfgas Helium eingesetzt, wobei der Heliumpartialdruck gemessen wird. Von dem Helimpartialdruck wird auf den Totaldruck am Einlassflansch des Massenspektrometers geschlossen.

Das Massenspektrometer 12 wird bei geöffnetem Ventil V2 und geschlossenen Ventilen V1 und V4 evakuiert. Sobald der Druck im Massenspektrometer 12 und der mit der Druckmessvorrichtung 27 gemessene Druck im Vorvakuumvolumen 29 für den Betrieb des Massenspektrometers 12 ausreichend gering sind (1E-4 mbar in 12 und <1 mbar in 28) wird das Ventil V2 geschlossen. Danach wird zum Abpumpen des Prüflings am Prüfgaseinlass das Ventil V1 geöffnet. Sobald der Totaldruck am Prüfgaseinlass 18 einen ausreichenden Wert von circa 15 mbar unterschreitet, wird das Ventil V2 geöffnet, um mit der massenspektrometrischen Analyse zur Lecksuche zu beginnen. Bei weiterem Absenken des Totaldrucks auf unter 2mbar wird mit dem Ziel, den klassischen Gegenstrom-Lecksuchbetrieb zu erreichen, das Ventil V1 geschlossen und das Ventil V4 geöffnet.

Das zweite Ausführungsbeispiel unterscheidet sich von dem ersten Ausführungsbeispiel durch einen zweiten Zwischengaseinlass 44 der Hochvakuumpumpe 14. Der zweite Zwischengaseinlass 44 ist über eine mit einem separat schließbaren Ventil V3 versehenen gasführenden Leitung 46 mit dem Prüfgaseinlass 18 verbunden.

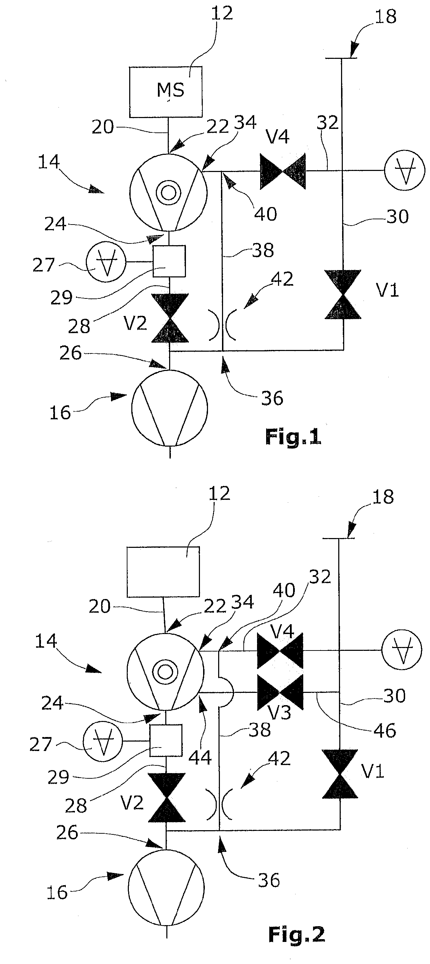

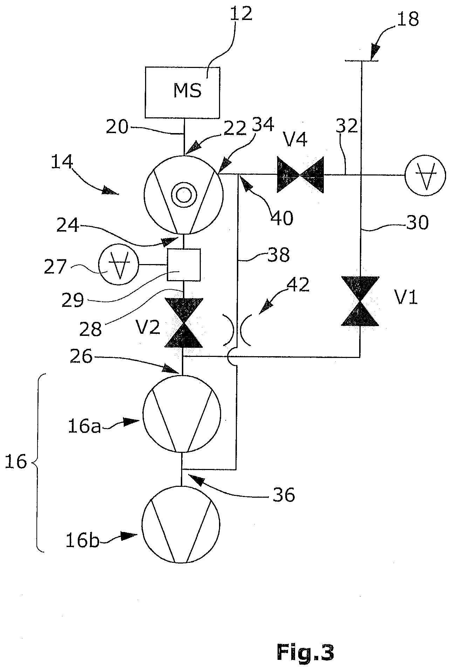

Das dritte Ausführungsbeispiel nach Figur 3 unterscheidet sich von dem Ausführungsbeispiel nach Figur 1 dadurch, dass der Abzweigungspunkt 36 zwischen den Pumpenstufen 16a, 16b einer mehrstufigen Vorvakuumpumpe 16 liegt. Grundsätzlich kann der Abzweigungspunkt an einer beliebigen Stelle im Vorvakuumstrang zwischen dem Prüfgaseinlass 18 und dem Auslass 24 der Hochvakuumpumpe 14 liegen.

Mit der erfindungsgemäßen Druckmessung ist es möglich, bei einem massenspektrometrischen Lecksucher über eine massenspektrometrische Partialdruckanalyse den Druck am Prüfgaseinlass bereits bei noch hohen Drücken im Vorvakuumbereich während des Evakuierens zu Bestimmen, ohne dass hierfür ein zusätzlicher Drucksensor erforderlich ist.

**Patentansprüche**

1. Vorrichtung zur Messung des Drucks am Prüfgaseinlass (18) eines massenspektrometrischen Lecksuchers, wobei ein Massenspektrometer (12) mit dem Einlass (22) einer Hochvakuumpumpe (14) verbunden ist, deren Auslass (24) über eine Vakuumleitung (28) gasleitend mit dem Einlass (26) einer Vorvakuumpumpe (16) verbunden ist, und der Einlass (26) der Vorvakuumpumpe (16) über eine Vorvakuum-Einlassleitung (30) gasleitend mit dem Prüfgaseinlass (18) verbunden ist, wobei der Einlass (26) der Vorvakuumpumpe (16) und mindestens ein Zwischengaseinlass (34) der Hochvakuumpumpe (14) durch eine eine Flussdrossel (42) aufweisende Verbindungsleitung (38) miteinander verbunden sind, **dadurch gekennzeichnet,** **dass** die Vorvakuum-Einlassleitung (30) ein separat schließbares erstes Ventil (V1) aufweist, **dass** die Vakuumleitung (28) ein zusätzliches, mit einer Druckmessvorrichtung (27) verbundenes Vorvakuumvolumen (29) und ein separat schließbares zweites Ventil (V2) aufweist, **dass** der Prüfgaseinlass (18) und der Zwischengaseinlass (34) durch eine Hochvakuum-Einlassleitung (32) verbunden sind, die ein separat schließbares drittes Ventil (V4) aufweist, wobei das Vorvakuumvolumen (29) derart dimensioniert ist, dass der Pumpenbetrieb zur Massivlecksuche bei geschlossener Vakuumleitung (28) und bei geschlossener Hochvakuum-Einlassleitung (32) ausreichend lange aufrechterhalten werden kann, ohne das Vorvakuumvolumen (29) wieder abzupumpen.

2. Vorrichtung nach Anspruch 1, **dadurch gekennzeichnet, dass** das Vorvakuumvolumen (29) derart dimensioniert ist, dass der Pumpenbetrieb zur Massivlecksuche über eine Stunde ununterbrochen durchgeführt werden kann.

3. Vorrichtung nach einem der vorhergehenden Ansprüche, **dadurch gekennzeichnet, dass** das Vorvakuumvolumen (29) größer als 10 cm$^3$ ist.

4. Vorrichtung nach einem der vorhergehenden Ansprüche, **dadurch gekennzeichnet, dass** die Flussdrossel (42) einen Gasdurchsatz im Bereich von 10$^{-5}$ mbar·l/s bis 10$^{-3}$ mbar·l/s bei einer an der Flussdrossel (42) anliegenden Druckdifferenz von circa 1000 mbar aufweist.

5. Vorrichtung nach einem der vorhergehenden Ansprüche, **dadurch gekennzeichnet, dass** die Entfernung von der Flussdrossel (42) bis zum vorvakuumpumpenseitigen Beginn der Verbindungsleitung (38) geringer ist als die Entfernung von der Flussdrossel (42) zum hochvakuumpumpenseitigen Ende der Verbindungsleitung (38).

6. Vorrichtung nach einem der vorhergehenden Ansprüche, **dadurch gekennzeichnet, dass** die Flussdrossel (42) als Blende oder Kapillare ausgebildet ist.

7. Vorrichtung nach einem der vorhergehenden Ansprüche, **dadurch gekennzeichnet, dass** der mit dem Einlass (26) der Vorvakuumpumpe (16) verbundene Einlass in die Verbindungsleitung (38) verblockt ist.

8. Verfahren zur Messung des Drucks an dem Prüfgaseinlass (18) eines massenspektrometrischen Lecksuchers, wobei ein Massenspektrometer (12) mit dem Einlass (22) einer Hochvakuumpumpe (14) verbunden ist, deren Auslass (24) über eine Vakuumleitung (28) gasleitend mit dem Einlass (26) einer Vorvakuumpumpe (16) verbunden ist und der Einlass (26) der Vorvakuumpumpe (16) über eine Vorvakuum-Einlassleitung gasleitend mit dem Prüfgaseinlass (18) verbunden ist, wobei von dem Gasstrom vom Prüfgaseinlass (18) zur Vorvakuumpumpe (16) ein Teilstrom abgezweigt, gedrosselt und mindestens einem Zwischengaseinlass (34) der Hochvakuumpumpe (14) zugeführt wird und der Druck am Prüfgaseinlass (18) durch Messen des Testgaspartialdrucks in dem abgezweigten Teilstrom mit dem Massenspektrometer (12) bestimmt wird,
**dadurch gekennzeichnet,**
**dass** die Vorvakuum-Einlassleitung (30) ein separat schließbares erstes Ventil (V1) aufweist,
**dass** die Vakuumleitung (28) ein zusätzliches, mit einer Druckmessvorrichtung (27) verbundenes Vorvakuumvolumen (29) und ein separat schließbares zweites Ventil (V2) aufweist,
**dass** der Prüfgaseinlass (18) und der Zwischengaseinlass (34) durch eine Hochvakuum-Einlassleitung (32) verbunden sind, die ein separat schließbares drittes Ventil (V4) aufweist,
wobei das Vorvakuumvolumen (29) derart dimensioniert ist, dass der Pumpenbetrieb zur Massivlecksuche bei geschlossener Vakuumleitung (28) und bei geschlossener Hochvakuum-Einlassleitung (32) ausreichend lange aufrechterhalten werden kann, ohne das Vorvakuumvolumen (29) wieder abzupumpen.

9. Verfahren nach Anspruch 8, **dadurch gekennzeichnet, dass** das Vorvakuumvolumen (29) derart dimensioniert ist, dass der Pumpenbetrieb zur Massivlecksuche über eine Stunde ununterbrochen durchgeführt werden kann.

10. Verfahren nach einem der vorhergehenden Ansprüche, **dadurch gekennzeichnet, dass** das Vorvakuumvolumen (29) größer als 10 cm$^3$ ist.

11. Verfahren nach einem der vorhergehenden Ansprüche, **dadurch gekennzeichnet, dass** der Teilstrom auf einen Maximalwert im Bereich von 10$^{-5}$ bis 10$^{-3}$ mbar·l/s bei einer Druckdifferenz von circa 1000 mbar gedrosselt wird.

12. Verfahren nach einem der vorhergehenden Ansprüche, **dadurch gekennzeichnet, dass** die Entfernung des Orts der Drosselung des Teilstroms näher zum Einlass (26) der Vorvakuumpumpe (16) als zum Zwischeneinlass (34) der Hochvakuumpumpe (14) angeordnet ist.

13. Verfahren nach einem der vorhergehenden Ansprüche, **dadurch gekennzeichnet, dass** der abgezweigte Teilstrom verblockt wird.

**Claims**

1. A device for measuring the pressure at the test gas inlet (18) of a mass-spectrometric leak detector, wherein a mass spectrometer (12) is connected to the inlet (22) of a high vacuum pump (14) having its outlet (24) connected to the inlet (26) of a pre-vacuum pump (16) via a vacuum line (28) in a gas conducting manner, and wherein the inlet (26) of the pre-vacuum pump (16) is connected to the test gas inlet (18) via a pre-vacuum inlet line (30) in a gas conducting manner, wherein the inlet (26) of the pre-vacuum pump (16) and at least one intermediate gas inlet (34) of the high vacuum pump (14) are connected to each other by a connection line (38) comprising a flow throttle (42),
**characterized in that**
the pre-vacuum inlet line (30) comprises a separately closable first valve (V1),
the vacuum line (28) comprises an additional pre-vacuum volume (29) connected to a pressure measurement device (27) and comprising a separately closable second valve (V2),

the test gas inlet (18) and the intermediate gas inlet (34) are connected via a high vacuum inlet line (32) comprising a separately closable third valve (V4), wherein the pre-vacuum volume (29) is dimensioned in such a manner that the pump operation for detection of massive leaks with the vacuum line (28) closed and the high vacuum inlet line (32) closed can be maintained for a sufficient duration of time without pumping off the pre-vacuum volume (29) again.

2. Device according to claim 1, **characterized in that** the pre-vacuum volume (29) is dimensioned in such a manner that the pump operation for detection of massive leaks can be performed for one hour without interruption.

3. Device according to one of the preceding claims, **characterized in that** the pre-vacuum volume (29) is larger than 10 cm$^3$.

4. The device according to any one of the preceding claims, **characterized in that** the flow throttle (42) has a gas throughput in the range of 10$^{-5}$ mbar·l/s to 10$^{-3}$ mbar·l/s with a pressure difference of about 1000 mbar prevailing at the flow throttle (42).

5. The device according to any one of the preceding claims, **characterized in that** the distance from the flow throttle (42) to a vacuum-pump-side start of the connection line (38) is less than the distance from the flow throttle (42) to a high-vacuum-pump-side end of the connection line (38).

6. The device according to any one of the preceding claims, **characterized in that** the flow throttle (42) is designed as an orifice or a capillary.

7. The device according to any one of the preceding claims, **characterized in that** the connection line inlet which is connected to the inlet (26) of the pre-vacuum pump (16) is blocked.

8. A method for measuring the pressure at the test gas inlet (18) of a mass-spectrometric leak detector, wherein a mass spectrometer (12) is connected to the inlet (22) of a high vacuum pump (14) having its outlet (24) connected to the inlet (26) of a pre-vacuum pump (16) via a vacuum line (28) in a gas conducting manner, and wherein the inlet (26) of the pre-vacuum pump (16) is connected to the test gas inlet (18) via a pre-vacuum inlet line (30) in a gas conducting manner, wherein from the gas flow from the test gas inlet (18) to the pre-vacuum pump (16), a partial flow is branched off, throttled and supplied to at least one intermediate gas inlet (34) of the high vacuum pump (14) and the pressure at the test gas inlet (18) is determined by measuring the test gas partial pressure in said branched-off partial flow by means of the mass spectrometer (12), **characterized in that** the pre-vacuum inlet line (30) comprises a separately closable first valve (V1), the vacuum line (28) comprises an additional pre-vacuum volume (29) connected to a pressure measurement device (27) and comprising a separately closable second valve (V2), the test gas inlet (18) and the intermediate gas inlet (34) are connected via a high vacuum inlet line (32) comprising a separately closable third valve (V4), wherein the pre-vacuum volume (29) is dimensioned in such a manner that the pump operation for detection of massive leaks with the vacuum line (28) closed and the high vacuum inlet line (32) closed can be maintained for a sufficient duration of time without pumping off the pre-vacuum volume (29) again.

9. Method according to claim 8, **characterized in that** the pre-vacuum volume (29) is dimensioned in such a manner that the operation for detection of massive leaks can be performed for one hour without interruption.

10. Method according to any one of the preceding claims, **characterized in that** the pre-vacuum volume (29) is larger than 10 cm$^3$.

11. The method according to any one of the preceding claims, **characterized in that** the partial flow is throttled to a maximum value in the range of 10$^{-5}$ to 10$^{-3}$ mbar·l/s with a pressure difference of about 1000 mbar.

12. The method according to any one of the preceding claims, **characterized in that** the location of the throttling of the partial flow is arranged closer to the inlet (26) of the pre-vacuum pump (16) than to the intermediate gas inlet (34) of the high vacuum pump (14).

13. The method according to any one of the preceding claims, **characterized in that** the branched-off partial flow is blocked.

**Revendications**

1. Dispositif permettant de mesurer la pression à l'entrée de gaz de contrôle (18) d'un détecteur de fuites d'un spectromètre de masse, dans lequel un spectromètre de masse (12) est relié à l'aspiration (22) d'une pompe à vide poussé (14), dont le refoulement (24) est relié de manière poreuse au gaz à l'aspiration (26) d'une pompe à vide préliminaire (16) par le biais d'une ligne de vide (28), et l'aspiration (26) de la pompe à vide préliminaire (16) est reliée de manière poreuse à l'entrée de gaz de contrôle (18) par le biais d'une ligne d'aspiration de vide préliminaire (30), dans lequel l'aspiration (26) de la pompe à vide préliminaire (16) et au moins une aspiration intermédiaire de gaz (34) de la pompe à vide poussé (14) sont reliées l'une à l'autre par le biais d'une ligne de raccordement (38) comportant un étranglement de flux (42),

**caractérisé**

**en ce que** la ligne d'aspiration de vide préliminaire (30) comporte une première vanne pouvant être fermée séparément (V1),

**en ce que** la ligne de vide (28) comporte un volume de vide préliminaire (29) supplémentaire raccordé à un dispositif de mesure de pression (27) et une deuxième vanne pouvant être fermée séparément (V2),

**en ce que** l'entrée de gaz de contrôle (18) et l'aspiration intermédiaire de gaz (34) sont reliées par une ligne d'aspiration de vide poussé (32), laquelle comporte une troisième vanne pouvant être fermée séparément (V4),

dans lequel le volume de vide préliminaire (29) est dimensionné de telle sorte que le fonctionnement de la pompe pour détection de fuite de masse lorsque la ligne de vide (28) est fermée et la ligne d'aspiration de vide poussé (32) est fermée peut être maintenu pour une durée suffisante, sans pomper à nouveau le volume de vide préliminaire (29).

**2.** Dispositif selon la revendication 1, **caractérisé en ce que** le volume de vide préliminaire (29) est dimensionné de telle sorte que le fonctionnement de la pompe pour détection de fuite de masse peut être mis en œuvre de manière ininterrompue sur une heure.

**3.** Dispositif selon l'une des revendications précédentes, **caractérisé en ce que** le volume de vide préliminaire (29) est supérieur à 10 cm$^3$.

**4.** Dispositif selon l'une des revendications précédentes, **caractérisé en ce que** l'étranglement de flux (42) présente un débit de gaz dans un intervalle de $10^{-5}$ mbar l/s à $10^{-3}$ mbar l/s lorsqu'il existe une différence de pression d'environ 1000 mbar à l'étranglement de flux (42).

**5.** Dispositif selon l'une des revendications précédentes, **caractérisé en ce que** la distance de l'étranglement de flux (42) jusqu'au début côté pompe à vide préliminaire de la ligne de raccordement (38) est inférieur à la distance de l'étranglement de flux (42) jusqu'à la fin côté pompe à vide poussé de la ligne de raccordement (38) .

**6.** Dispositif selon l'une des revendications précédentes, **caractérisé en ce que** l'étranglement de flux (42) est réalisé comme diaphragme ou comme capillaire.

**7.** Dispositif selon l'une des revendications précédentes, **caractérisé en ce que** l'entrée raccordée à l'aspiration (26) de la pompe à vide préliminaire (16) est fixée dans la ligne de raccordement (38).

**8.** Procédé permettant de mesurer la pression à l'entrée de gaz de contrôle (18) d'un détecteur de fuites d'un spectromètre de masse, dans lequel un spectromètre de masse (12) est relié à l'aspiration (22) d'une pompe à vide poussé (14), dont le refoulement (24) est relié de manière poreuse au gaz à l'aspiration (26) d'une pompe à vide préliminaire (16) par le biais d'une ligne de vide (28) et l'aspiration (26) de la pompe à vide préliminaire (16) est reliée de manière poreuse à l'entrée de gaz de contrôle (18) par le biais d'une ligne d'aspiration de vide préliminaire, dans lequel un flux partiel est dérivé du flux de gaz depuis l'entrée de gaz de contrôle (18) jusqu'à la pompe à vide préliminaire (16), étranglé et conduit à au moins une aspiration de gaz intermédiaire (34) de la pompe à vide poussé (14) et la pression à l'entrée de gaz de contrôle (18) est déterminée avec le spectromètre de masse (12) par mesure de la pression partielle de gaz de contrôle dans le flux partiel dérivée,

**caractérisé**

**en ce que** la ligne d'aspiration de vide préliminaire (30) comporte une première vanne pouvant être fermée séparément (V1),

**en ce que** la ligne de vide (28) comporte un volume de vide préliminaire (29) supplémentaire raccordé à un dispositif de mesure de pression (27) et une deuxième vanne pouvant être fermée séparément (V2),

**en ce que** l'entrée de gaz de contrôle (18) et l'aspiration intermédiaire de gaz (34) sont reliées par une ligne d'aspiration de vide poussé (32), laquelle comporte une troisième vanne pouvant être fermée séparément (V4),

dans lequel le volume de vide préliminaire (29) est dimensionné de telle sorte que le fonctionnement de la pompe pour détection de fuite de masse lorsque la ligne de vide (28) est fermée et la ligne d'aspiration de vide poussé (32) est fermée peut être maintenu pour une durée suffisante, sans pomper à nouveau le volume de vide préliminaire (29).

**9.** Procédé selon la revendication 8, **caractérisé en ce que** le volume de vide préliminaire (29) est dimensionné de telle sorte que le fonctionnement de la pompe pour détection de fuite de masse peut être mis en œuvre de manière ininterrompue sur une heure.

10. Procédé selon l'une des revendications précédentes, **caractérisé en ce que** le volume de vide préliminaire (29) est supérieur à 10 cm$^3$.

11. Procédé selon l'une des revendications précédentes, **caractérisé en ce que** le flux partiel est étranglé à une valeur maximale dans un intervalle de 10$^{-5}$ à 10$^{-3}$ mbar l/s pour une différence de pression d'environ 1000 mbar.

12. Procédé selon l'une des revendications précédentes, **caractérisé en ce que** l'éloignement de l'endroit de l'étranglement du flux partiel est agencé comme plus proche de l'aspiration (26) de la pompe à vide préliminaire (16) que de l'aspiration intermédiaire (34) de la pompe à vide poussé (14).

13. Procédé selon l'une des revendications ci-dessus, **caractérisé en ce que** le flux partiel dérivé est bloqué.

**Fig.1**

**Fig.2**

**Fig.3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 283543 A1
- EP 0615615 B1
- WO 2004111599 A1
- WO 2015036282 A2
- DE 4140366 A1
- DE 19504278 A1
- EP 0283543 A1